# EUROPÄISCHE PATENTANMELDUNG

(11) **EP 2 417 845 A1**
(43) Veröffentlichungstag der Anmeldung: **15.02.2012**
(21) Anmeldenummer: 11401572.0
(22) Anmeldetag: 15.08.2011
(51) Int. Cl.: A01C 7/08

(54) **Pneumatisch arbeitende Verteilmaschine**

(30) Priorität: 13.08.2010 DE 102010036975
(71) Anmelder: Amazonen-Werke H. Dreyer GmbH & Co. KG, 49205 Hasbergen (DE)
(72) Erfinder: Häfker, Gerd, 27305 Süstedt (DE); Paulsen, Sven, 27798 Hude (DE); Wilken, Martin, 26409 Wittmund (DE)

(57) **Zusammenfassung**

Pneumatisch arbeitende Verteilmaschine zum Verteilen von Saatgut oder Düngemittel, mit einem Vorratsbehälter (1) für das Verteilgut, einem damit in Verbindung stehenden Dosierorgan (2), einem Verteiler (6) der über eine pneumatische Förderleitung (4) mit dem Dosierorgan (2) verbunden ist, von dem Verteiler (6) führenden Leitungen (11) zu einzelnen Ausbringorganen, wobei die pneumatische Förderleitung (4) ab zumindest einem Umlenkbogen (5) zumindest einen Richtungswechsel beschreibt und im Wesentlichen senkrecht aufsteigend an den Verteiler (6) herangeführt ist, wobei die Förderleitung (4) in ihrem letzten liegengend verlaufenden Bereich bis zu zumindest einem Umlenkbogen (13) zumindest annähernd horizontal verlaufend herangeführt ist, wobei der senkrecht aufsteigende Bereich (16) der Förderleitung (4) zwischen dem Umlenkbogen (5) und dem Verteiler (6) zumindest teilweise als wellenförmiges Zerstreuungsrohr(10) ausgebildet ist. Um mit einfachen Mitteln und einfacher Ausgestaltung des Förderweges im Umlenkbereich (5) und vor der Zuführung des zu verteilenden Materiales zum Zerstreuungsrohr (10) eine gute und gleichmäßige Zuführung und Verteilung des Saatgutes im Luftstrom zu dem Zerstreuungsrohr (10) vorzugsweise ohne zusätzliche Einbauten in Umlenkbögen (5) zu erreichen, ist vorgesehen, dass sich in Förderrichtung gesehen an den horizontalen Bereich der Förderleitung (4) ein erster Umlenkbogen (13) mit einem Krümmungsradius zwischen 20° und 70°, vorzugsweise 30° bis 60° anschließt, dass sich an den ersten Umlenkbogen (13) ein geradlinig schräg aufsteigend verlaufender Bereich (14) der Förderleitung (4) anschließt, dass sich an den geradlinig schräg aufsteigend verlaufenden Bereich (14) der Förderleitung ein zweiter Umlenkbogen (15) mit einem Krümmungsradius zwischen 20° und 70°, vorzugsweise 30° bis 60° anschließt, dass der zweite Krümmungsbogen (15) in Richtung des senkrecht verlaufenden Zerstreuungsrohres (10) geführt ist.

## Beschreibung

Die Erfindung betrifft eine pneumatisch arbeitende Verteilmaschine gemäß des Oberbegriffes des Patentanspruches 1.

Eine derartige pneumatisch arbeitende Verteilmaschine ist beispielsweise durch die EP 09 56 757 B1 bekannt. Diese Verteilmaschine weist eine Förderleitung mit einem Umlenkbogen auf. Der Umlenkbogen mündet in einem senkrecht aufsteigenden Steigrohr, welches einen Bereich der Förderleitung bildet. Dieses Steigrohr weist ein wellenförmiges Zerstreuungsrohr auf. Der Umlenkbogen zwischen dem horizontal verlaufenden Bereich der Förderleitung und dem senkrecht aufsteigenden Bereich der Förderleitung ist als Flachrohrbogen ausgebildet. Durch den Flachrohrbogen soll eine bessere und gleichmäßigere Verteilung und Zuführung des Saatgutes in dem Luftstrom zu dem Zerstreuungsrohr und dem Verteiler erreicht werden. Die Ausgestaltung des Umlenkbogens als Flachrohrbogen erfordert eine besondere Fertigung des Umlenkbogens sowie gesonderte Übergangsstücke zwischen den einen runden Querschnitt aufweisenden übrigen Bereich der Förderleitung und dem Umlenkbogen.

Der Erfindung liegt die Aufgabe zugrunde, mit einfachen Mitteln und einfacher Ausgestaltung des Förderweges im Umlenkbereich und vor der Zuführung des zu verteilenden Materiales zum Zerstreuungsrohr eine gute und gleichmäßige Zuführung und Verteilung des Saatgutes im Luftstrom zu dem Zerstreuungsrohr vorzugsweise ohne zusätzliche Einbauten in Umlenkbögen zu erreichen.

Diese Aufgabe wird erfindungsgemäß durch die kennzeichnenden Merkmale des Patentanspruches 1 gelöst. Infolge dieser Maßnahmen kann der Umlenkbogen aus herkömmlichen Krümmungsbögen und Förderleitungselementen hergestellt werden. Derartige Krümmungsbögen und/oder Leitungsabschnitte lassen sich in einfacher Weise herstellen und aneinander anfügen. Hierdurch ist eine preiswerte Fertigung der Krümmungsbögen für den Umlenk- und Zuführungsbereich zu dem Zerstreuungsrohr möglich. In überraschender Weise hat sich gezeigt, dass mit einer derartigen Ausgestaltung des Umlenkbogens unter der Förderstrecke vor dem Zerstreuungsrohr durch die erfindungsgemäße Anordnung der Krümmungs- und Förderstrecke vor dem Zerstreuungsrohr eine gleichmäßige Verteilung des Saatgutes im Luftstrom bei der Übergabe in dem senkrecht aufsteigenden Bereich der Förderleitung zu dem wellenförmigen Zerstreuungsrohr erreicht wird. Durch eine derartig kombinatorische Gesamtwirkung von einfindungsgemäßen Umlenkbögen und schräger Förderstrecke in Verbindung mit dem wellenförmigen Zerstreuungsrohr lässt sich in äußerst einfacher Weise eine gleichmäßige Zuführung des Saatgutluftgemisches zu dem Verteiler und damit eine gleichmäßige Aufteilung auf die von dem Verteiler wegführenden Leitung zu den einzelnen Ausbringorganen überraschend Weise erreichen.

Durch die erfindungsgemäße Anordnung der beiden Umlenkbögen über einen Krümmungsbereich von zumindest annähernd 45° Mitte der zugeordneten schrägen Förderstrecke ergibt sich so in vergleichmäßigender Weise wirksamer Umlenkbereich.

Eine einfache Ausgestaltung der gesamten Förderleitung ergibt sich dadurch, dass die Förderleitung auch in Bereich des Umlenkbogens einen runden Querschnitt aufweist.

Eine besonders einfache Ausgestaltung des Umlenkbogens ergibt sich dadurch, dass die Krümmungsbögen über ihren gesamten Verlauf jeweils zumindest annähernd den gleichen Krümmungsradius aufweisen.

Weiterhin ergibt sich eine sehr einfache Ausgestaltung der Förderleitung auch im Bereich der Umlenkbögen dadurch, dass die Krümmungsbögen über ihren gesamten Verlauf jeweils zumindest annähernd den gleichen Durchmesser aufweisen.

Weiterhin ist in einer Ausführungsform vorgesehen, dass der zweite Krümmungsbogen sich unmittelbar an das Zerstreuungsrohr anschließt.

In einer anderen Ausführungsform ist vorgesehen, dass zwischen dem zweiten Krümmungsbogen und dem Zerstreuungsrohr ein senkrecht verlaufend ausgestalteter Bereich Förderleitung angeordnet ist.

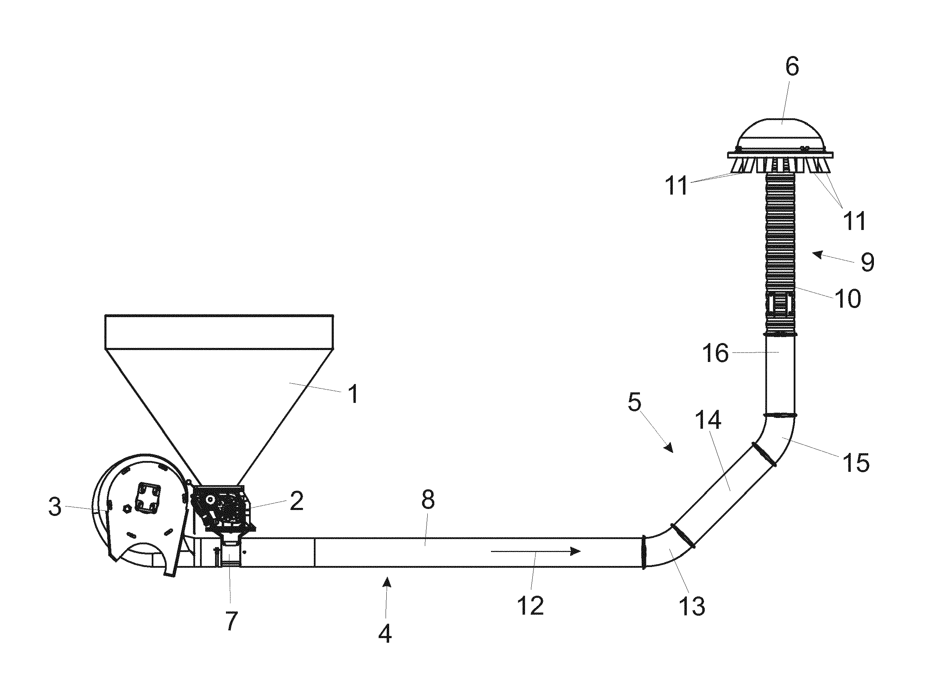

Weitere Einzelheiten der Erfindung sind der Beispielsbeschreibung und der Zeichnung zu entnehmen. Die Zeichnung zeigt
die Anordnung des Vorratsbehälters der Dosiereinrichtung und Förderleitung mit Verteilerkopf einer Verteilmaschine in Seitenansicht und Prinzipdarstellung.

Der Einfachheit halber sind in der Zeichnung lediglich der Vorratsbehälter 1, die Dosiereinrichtung 2, die von dem angetriebenen Gebläse 3 pneumatisch beaufschlagte Förderleitung 4 mit Umlenkbereich 5 und einem als Verteilerkopf 6 ausgebildeten Verteiler dargestellt. In dem Vorratsbehälter 1 befindet sich das auszubringende Material, hier beispielsweise Saatgut. Dieses sich im Vorratsbehälter 1 befindliche Saatgut wird über das Dosierorgan 2 in einstellbaren Mengen über eine Schleuse 7 in den Förderluftstrom der Förderleitung 4 eingespeist. Über den horizontal verlaufenden Bereich 8 der Förderleitung wird das Saatgut von dem Luftstrom, der von dem angetriebenen Gebläse 3 erzeugt wird dem zwischen dem horizontalen Bereich 8 der Förderleitung 4 und dem senkrecht aufsteigenden Bereich 9 des Zerstreuungsrohres 10 über den in der Förderleitung 4 angeordneten Umlenkbereich 5 zugeführt. Der senkrecht aufsteigende Bereich 9 der Förderleitung 4 weist einen Bereich auf, der als wellenförmiges Zerstreuungsrohr 10 ausgebildet ist. Am Ende der senkrecht aufsteigenden Förderleitung 4 ist der als Verteilerkopf 6 ausgebildet Verteiler angeordnet, von dem aus Abgangsleitungen 11, an denen zu einzelnen Ausbringorganen, die beispielsweise als Säschare ausbildet sind, führende Leitungen angeschlossen sind. Von dem Verteilerkopf 6 wird das über dem Zerstreuungsrohr 10 dem Verteiler 6 zugeführten Saatgut in gleichmäßiger Weise auf die einzelnen Abgangsleitungen 11 aufgeteilt.

Der Umlenkbereich 5 weist zwei Krümmungsbereiche auf. In Förderrichtung 12 gesehen schließt sich an den horizontalen Bereich 8 der Förderleitung 5 ein erster Umlenkbogen 13 mit einem Krümmungsbereich zwischen 20° und 70°, vorzugsweise 30° bis 60° an, hier im Ausführungsbeispiel von 45° an. An den ersten Umlenkbogen 13 schließt sich ein geradlinig schräg aufsteigend verlaufender Bereich 14 der Förderleitung 8 an. An den geradlinig schräg aufsteigend verlaufenden Bereich 14 der Förderleitung 4 schließt sich ein zweiter Umlenkbogen 15 mit einem Krümmungsbereich zwischen 20° und 70°, vorzugsweise 30° bis 60° wie die Zeichnung zeigt. Der zweite Krümmungsbogen 15 ist in Richtung des senkrecht verlaufenden Zerstreuungsrohres 10 geführt ist.

Die Krümmungsbögen 13 und 15 weisen über ihren gesamten Verlauf jeweils zumindest annähernd den gleichen Krümmungsradius auf.

Weiterhin weisen die Krümmungsbögen 13 und 15 über ihren gesamten Verlauf jeweils zumindest annähernd den gleichen Durchmesser auf.

Zwischen dem zweiten Krümmungsbogen 15 und dem Zerstreuungsrohr 10 ist ein kurzer senkrecht verlaufend ausgestalteter Bereich 16 der Förderleitung 4 angeordnet, der sich dann an das Zerstreuungsrohr 10 anschließt.

In nicht dargestellter Weise ist es jedoch auch möglich, dass sich der zweite Krümmungsbogen 15 unmittelbar an das Zerstreuungsrohr 10 anschließt.

Durch den erfindungsgemäß verlaufend ausgestalteten Verlauf des von den Krümmungsbögen 13 und 15 in Verbindung mit dem schräg ansteigend verlaufend Leitungsstück 14 gebildeten Umlenkbereiches 5 wird eine Vergleichmäßigung des Saatgutes über den Querschnitt der Förderleitung am Ende des Umlenkbogens 15 im Luftstrom bei der Übergabe in den senkrecht aufsteigenden Bereich der Förderleitung 4 zu dem wellenförmigen Zerstreuungsrohr 10 erreicht, so dass sich in überraschender Weise eine äußerst gleichmäßige Verteilung des Saatgutes im Luftstrom im Zusammenwirken mit dem Zerstreuungsrohr 10 am Ende der Förderleitung 4 bei der Übergabe zu dem Verteiler 6 ergibt. Hierdurch wird eine sehr gleichmäßige Verteilung des Saatgutes auf die einzelnen Abgangsleitungen 11 über den Verteiler 6 erreicht.

## Patentansprüche

1. Pneumatisch arbeitende Verteilmaschine zum Verteilen von Saatgut oder Düngemittel,
mit einem Vorratsbehälter für das Verteilgut,
einem damit in Verbindung stehenden Dosierorgan,
einem Verteiler der über eine pneumatische Förderleitung mit dem Dosierorgan verbunden ist,
von dem Verteiler führenden Leitungen zu einzelnen Ausbringorganen,
wobei die pneumatische Förderleitung ab zumindest einem Umlenkbogen zumindest einen Richtungswechsel beschreibt und im Wesentlichen senkrecht aufsteigend an den Verteiler herangeführt ist,
wobei die Förderleitung in ihrem letzten liegend verlaufenden Bereich bis zu zumindest einem Umlenkbogen zumindest annähernd horizontal verlaufend herangeführt ist, wobei der senkrecht aufsteigende Bereich der Förderleitung zwischen dem Umlenkbogen und dem Verteiler zumindest teilweise als wellenförmiges Zerstreuungsrohr ausgebildet ist,
**dadurch gekennzeichnet,**
**dass** sich in Förderrichtung (12) gesehen an den horizontalen Bereich (8) der Förderleitung (4) ein erster Umlenkbogen (13) mit einem Krümmungsbereich zwischen 20° und 70°, vorzugsweise 30° bis 60° anschließt,
**dass** sich an den ersten Umlenkbogen (13) ein geradlinig schräg aufsteigend verlaufender Bereich (14) der Förderleitung (4) anschließt,
**dass** sich an den geradlinig schräg aufsteigend verlaufenden Bereich (14) der Förderleitung (4) ein zweiter Umlenkbogen (15) mit einem Krümmungsbereich zwischen 20° und 70°, vorzugsweise 30° bis 60° anschließt,
**dass** der zweite Krümmungsbogen (15) in Richtung des senkrecht verlaufenden Zerstreuungsrohres (10) geführt ist.

2. Verteilmaschine nach Anspruch 1, **dadurch gekennzeichnet, dass** die beiden Umlenkbögen (13, 15) über ein Krümmungsbereich von zumindest annähernd 45° verlaufen.

3. Verteilmaschine nach einem oder mehreren der vorstehenden Ansprüche, **dadurch gekennzeichnet, dass** die Krümmungsbögen (13, 15) über ihren gesamten Verlauf jeweils zumindest annähernd den gleichen Krümmungsradius aufweisen.

4. Verteilmaschine nach einem oder mehreren der vorstehenden Ansprüche, **dadurch gekennzeichnet, dass** die Krümmungsbögen (13, 15) über ihren gesamten Verlauf jeweils zumindest annähernd den gleichen Durchmesser aufweisen.

5. Verteilmaschine nach Anspruch 1, **dadurch gekennzeichnet, dass** der zweite Krümmungsbogen sich unmittelbar an das Zerstreuungsrohr anschließt.

6. Verteilmaschine nach Anspruch eins, **dadurch gekennzeichnet, dass** zwischen dem zweiten Krümmungsbogen (15) und dem Zerstreuungsrohr (10) ein senkrecht verlaufend ausgestalteter Bereich (16) Förderleitung (4) angeordnet ist.
